# EUROPEAN PATENT SPECIFICATION

(11) **EP 4 397 544 B1**
(45) Date of publication and mention of the grant of the patent: **12.03.2025**
(21) Application number: 23150771.6
(22) Date of filing: 09.01.2023
(51) Int. Cl.: B60R 1/06, B60R 1/062

(54) **REARVIEW MIRROR ASSEMBLY FOR A VEHICLE AND VEHICLE**
RÜCKSPIEGELANORDNUNG FÜR EIN FAHRZEUG UND FAHRZEUG
ENSEMBLE RÉTROVISEUR POUR VÉHICULE ET VÉHICULE

(43) Date of publication of application: 10.07.2024
(73) Proprietor: Volvo Car Corporation, 405 31 Göteborg (SE)
(72) Inventor: JARTOFT, Hans, 40531 Göteborg (SE)
(74) Representative: Maiwald GmbH

(56) References cited:
- EP-A2- 1 321 334
- US-A1- 2017 210 297
- US-A1- 2018 257 571
- US-A1- 2020 189 470

## Description

The present disclosure relates to a rearview mirror assembly for a vehicle.

The present disclosure is additionally directed to a vehicle comprising a structural component and a rearview mirror assembly.

In addition to a rearview mirror assembly, a modern vehicle may also comprise a camera unit configured to provide images of the vehicle's environment.

Such a camera unit may be provided separate from the rearview mirror assembly. Alternatively, the camera unit and the rearview mirror assembly may be provided in an integrated manner.

US 2020/189470 A1 discloses a rearview device for a motor vehicle with a moveable head assembly and a method of assembling same. US 2018/257571 A1 relates to an exterior rearview mirror assembly configured for mounting at an exterior portion of a vehicle.
EP 1 321 334 A2 discloses an exterior rearview mirror with built-in camera for a vehicle.
US 2017/210297 A1 shows a vehicle modular side view mirror assembly.

It is an objective of the present disclosure to improve rearview mirror assemblies having an integrated camera.

The problem is at least partially solved or alleviated by the subject matter of the independent claims of the present disclosure, wherein further examples are incorporated in the dependent claims.

According to a first aspect, there is provided a rearview mirror assembly for a vehicle. The rearview mirror assembly comprises a base part having a mounting interface for rigidly attaching the base part to a structural component of the vehicle. Moreover, the rearview mirror assembly comprises a mirror part carrying a reflective surface. Additionally, the rearview mirror assembly comprises a housing part covering at least a part of one side of the mirror part. The mirror part is rigidly attached to the housing part. The housing part is movably coupled to the base part, such that an orientation of the mirror part is adjustable. Furthermore, a camera unit is attached to the base part. It is understood that the reflective SE:TOP surface of the mirror part provides the actual mirror functionality. Furthermore, due to the fact that the mirror part is rigidly attached to the housing part, the housing part and the mirror part are moved together with respect to the base part in order to adjust the mirror part's orientation to an eye position of a user of the rearview mirror assembly, e.g. a driver of the vehicle to which the rearview mirror assembly is attached. Beyond that, the fact that the housing part is movably coupled to the base part offers the possibility to selectively move the housing part and the mirror part from an operational position in which the reflective surface of the mirror part can be used, into a retracted position and vice versa. The retracted position can also be called a folded-away position. If the mirror assembly is attached to a vehicle, it is not possible to use the reflective surface in the retracted position. However, in this position the housing part sticks out substantially less from the structural component of the vehicle than in the operational position. Moreover, the fact that the housing part is movably coupled to the base part allows the housing part and the mirror part to move with respect to the base part in case of a mechanical impact, i.e. if the housing part or the mirror part collides with an object outside the vehicle. Thus, the housing part and the mirror part can move out of the way in case of such a collision such that damage on the housing part or the mirror part is prevented or at least reduced in its intensity. Since the camera unit is attached to the base part, the camera unit does not move if the housing part and the mirror part are moved. Rather, the camera unit stays in a fixed position. This has the effect that a field of view of the camera unit does not move if the housing part and the mirror part are moved. In other words, the field of view stays in the desired position and orientation such that the camera unit can be used to capture images in a reliable manner and independent from a position or orientation of the housing part and the mirror part. The fact that the camera unit does not move has the further advantage that a camera unit with a comparatively small field of view is sufficient for capturing images of a predefined area in a reliable manner. Again, this is independent from the orientation and position of the housing part. Moreover, even if the housing part is moving, post-treatment of the captured images can be avoided and/or reduced to a minimum. Compared to arrangements comprising a camera unit being separate from a rearview mirror assembly, the rearview mirror assembly of the present disclosure has the advantage that it reduces complexity.
Moreover, having the camera unit integrated into the rearview mirror assembly reduces aerodynamic drag and noise resulting therefrom.

According to the invention, the camera unit is attached to the base part via a camera support part. Consequently, the camera unit can be located at a desired position within the rearview mirror assembly by using an appropriate camera support part. Moreover, using the camera support part, the camera unit is reliably supported inside the rearview mirror assembly. It is noted that the camera unit is always rigidly attached to the camera support part.

According to the invention, the rearview mirror assembly further comprises an actuator unit for moving the housing part with respect to the base part. The camera support part extends through the actuator unit. The actuator unit may be configured to at least rotate the housing part around two different axes of rotation with respect to the base part. It is noted that the mirror part is rigidly attached to the housing part. Consequently, using the actuator unit, the mirror part can be adjusted to an eye position of a user of the rearview mirror assembly. Additionally or alternatively, the actuator unit can be used for moving the housing part and the mirror part from a storage position into an operational position or vice versa. If attached to a vehicle, the reflective surface of the mirror part may be used in the operational position and the housing part is folded away in the stored position. The fact that the camera support part extends through the actuator unit offers the possibility to arrange the camera unit at a different side of the actuator unit as compared to the base part. At the same time, a configuration in which the camera support part extends through the actuator unit is compact.

The basic idea underlying the present disclosure can, thus, be summarized in that the camera unit is arranged in a fixed position inside the rearview mirror assembly, wherein the housing part and the mirror part of the mirror assembly are able to move around the camera unit while the camera unit is standing still.

In an example, the camera support part comprises a cable channel. Thus, power cables and/or signal cables being connected to the camera unit can be guided through the cable channel. This facilitates mounting of the cables and renders the structure of the rearview mirror assembly simple. Since the camera unit, the camera support part and the base part do not move during operation, cables extending through the cable channel also do not move. This enhances the reliability of a cabled connection.

In an example, the camera support part is tube-shaped, bar-shaped or rod-shaped. In other words, the camera support part is an elongated support member. The camera support part can also have a predefined cross-sectional profile. Such a camera support part consumes relatively little space and can, at the same time, reliably support the camera unit within the rearview mirror assembly.

In an example in which the camera support part is tube-shaped and at the same time comprises a cable channel, the inner channel formed by the tube-shape can be used as the cable channel.

In an example, the camera support part extends coaxially through the actuator unit. This configuration is particularly space-saving.

In an example, the camera support part is resiliently supported on the base part. Thus, using the resilience, the camera unit can be moved out of the way when being mechanically impacted during operation. This helps to reduce the effects that such an impact may have on the camera unit. Ideally, the camera unit is not damaged following such an impact.

An example of an impact is a so-called frontal impact. A frontal impact may occur in a situation in which the rearview mirror assembly is attached to a vehicle and the rearview mirror assembly collides with an object exterior to the vehicle, wherein the object is located in front of the rearview mirror assembly. In this context, the front is determined with respect to a standard forward driving direction of the vehicle.

Another example of an impact is a so-called rear impact. A rear impact may occur in a situation in which the rearview mirror assembly is attached to a vehicle and the rearview mirror assembly collides with an object exterior to the vehicle, wherein the object is located in the rear of the rearview mirror assembly. In this context, the rear is determined with respect to a standard forward driving direction of the vehicle.

In an example, the camera support part is supported on the base part via a spring or an elastomeric element. The spring or the elastomeric element offer resilient properties. The spring is for example a coil spring or a leaf spring. The elastomeric element is for example made from a polymer material. Altogether, the spring and the elastomeric element offer a simple and reliable way to resiliently support the camera support part on the base part.

In an example, the camera support part has one rotational degree of freedom with respect to the base part and is otherwise rigidly connected to the base part. This means that the camera support part can only rotate with respect to the base part. In this context, the rotation may only be possible if a spring or an elastomeric element is elastically deformed at the same time. The rotational degree of freedom may correspond to a desired retraction movement that is intended for the camera unit in case of the most common impacts that may occur if the rearview mirror assembly is attached to a vehicle. The present example offers a good compromise between a stable attachment of the camera unit and the ability to react to a mechanical impact by moving out of the way.

In an example, an axis of the rotational degree of freedom extends in parallel to a longitudinal extension of the camera support part. In other words, the camera support part may rotate around an axis corresponding to its longitudinal extension. This configuration is structurally simple and compact.

In an example, the camera unit is rigidly attached to the base part. Thus, as has been mentioned above, the field of view of the camera stays the same independent from a position of the housing part and the mirror part. This configuration is structurally very simple.

In an example, a field of view of the camera unit extends through the mirror part and the mirror part is at least partially transparent. This means that, in a first alternative, the mirror part is transparent in the area where the field of view extends through the mirror part. Thus, in this area the reflective surface is interrupted. In a second alternative, the mirror part is semi-transparent in the area where the field of view extends through the mirror part. Thus, in the second alternative, the reflective surface of the mirror part also may extend in the area where the field of view extends through the mirror part. This configuration allows the camera unit to be located on an opposite side of the mirror part with respect to the object to be detected by the camera unit. This configuration is relatively compact. At the same time, the mirror part serves as a protection for the camera unit. In a mounted condition of the rearview mirror assembly, the field of view extending through the mirror part may be oriented in a rearward direction of the vehicle. In other words, the camera unit is configured to face rearwards.

In an example, a field of view of the camera unit extends through the housing part and the housing part is at least partially transparent. The housing part may for example have a transparent portion. This configuration allows the camera unit to be located on an opposite side of the housing part with respect to the object to be detected by the camera unit. This configuration is relatively compact. At the same time, the housing part serves as a protection for the camera unit. In a mounted condition of the rearview mirror assembly, the field of view extending through the housing part may be oriented in a forward direction of the vehicle. In other words, the camera unit is configured to face forward.

It is noted that, of course, the above-mentioned examples of a field of view extending through the mirror part and a field of view extending through the housing part may be combined. In this context, two camera units may be used which are both attached to the base part, be it via a camera support part or not. The field of view extending through the mirror part may then for example be called a first field of view and the field of view extending through the housing part may for example be called a second field of view.

According to a second aspect, there is provided a vehicle comprising a structural component and a rearview mirror assembly of the present disclosure. The rearview mirror assembly is rigidly attached to the structural component of the vehicle. Consequently, the camera unit does not move with respect to the structural component of the vehicle. A field of view of the camera unit, thus, has a fixed spatial relation to the structural component of the vehicle and the vehicle in its entirety. All the effects and advantages that have already been mentioned in connection with the rearview mirror assembly also apply to a vehicle being equipped with such a review mirror assembly.

In an example, a field of view of the camera unit extends backwards with respect to a standard forward driving direction of the vehicle. Consequently, the camera unit can be used to detect objects in the environment of the vehicle which are located behind the rearview mirror assembly when considering a standard for driving direction of the vehicle.

In an example, a field of view of the camera unit extends forward with respect to a standard forward driving direction of the vehicle. Consequently, the camera unit can be used to detect objects in the environment of the vehicle which are located in front of the rearview mirror assembly when considering a standard for driving direction of the vehicle.

Of course, the two above-mentioned examples may also be combined. This means that a field of view extending forward and a field of view extending rearwards are provided in combination. In this context, the field of view extending forward may be called a first field of you and the field of view extending rearwards may be called a second field of view.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a rearview mirror assembly according to the present disclosure,
- Figure 2: shows the rearview mirror assembly of Figure 1 in a more detailed representation along direction II in Figure 1, wherein a mirror part of the rearview mirror assembly is represented in a transparent manner,
- Figure 3: shows the rearview mirror assembly of Figure 1 in a more detailed representation along direction III in Figure 1, wherein a housing part of the rearview mirror assembly is represented in a transparent manner, and
- Figure 4: shows the rearview mirror assembly of Figure 1 in a more detailed representation in a top view, wherein a housing part of the rearview mirror assembly is represented in a transparent manner.

The Figures are merely schematic representations and serve only to illustrate examples of the disclosure. Identical or equivalent elements are in principle provided with the same reference signs.

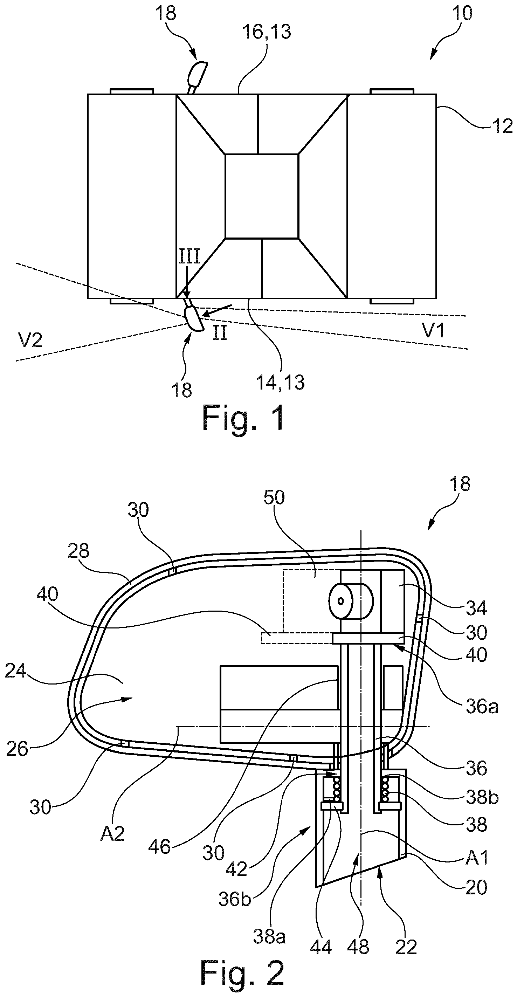

Figure 1 shows a vehicle 10 having a vehicle body 12.

The vehicle body 12 comprises a left the door 14 and a right door 16.

The vehicle body 12 and, thus, also the left door 14 and the right door 16 form a structural component 13 of the vehicle.

Both on the left door 14 and on the right door 16, there is provided a rearview mirror assembly 18. The rearview mirror assembly 18 is rigidly attached to the respective left door 14 or right door 16, i.e. to a structural component 13 of the vehicle 10.

The rearview mirror assembly 18 which is mounted to the left door 14 is shown in more detail in Figures 2 to 4, wherein in each of the Figures 2 to 4, the rearview mirror assembly 18 is shown from different perspectives. It is noted that all explanations provided in respect of the rearview mirror assembly 18 mounted to the left door 14 also apply to the rearview mirror assembly 18 mounted to the right door 16.

The review mirror assembly 18 comprises a base part 20.

The base part 20 comprises a mounting interface 22 and is rigidly attached to the left door 14 using the mounting interface 22. Consequently, the base part 20 is rigidly attached to a structural component 13 of the vehicle 10. Thus, the base part 20 cannot move with respect to the left door 14.

The rearview mirror assembly 18 also comprises a mirror part 24.

In the present example, the mirror parts 24 is essentially plate-shaped. One side of the mirror part 24 has a reflective surface 26 which provides the actual mirror functionality. In Figure 2, the mirror part 24 is represented in a transparent manner. However, it is understood that in reality, this is not the case in the perspective as shown in Figure 2.

Furthermore, the rearview mirror assembly 18 comprises a housing part 28.

The housing part 28 has the shape of a half-shell or cup in the present example.

An opening of the half-shell or cup is formed such that the mirror part 24 can be received in this opening.

This means that the shape of a cross section of this opening corresponds to the form of the mirror part 24.

The mirror part 24 is rigidly attached to the housing part 28 using fixation means 30.

In this configuration, the housing part 28 covers a backside of the mirror part 24. The backside is arranged opposite the reflective surface 26. In the present example, the housing part 28 covers the backside of the mirror part 24 in its entirety.

Moreover, the mirror part 24 and the housing part 28 form a volume which is enclosed by the mirror part 24 and the housing part 28.

The rearview mirror assembly 18 also comprises an actuator unit 32.

The actuator unit 32 connects the base part 20 and the housing part 28.

Moreover, the actuator unit 32 is configured to rotate the housing part 28 and the mirror part 24 being rigidly attached thereto with respect to the base part 20 around a first axis A1. In a condition in which the rearview mirror assembly 18 is mounted on the vehicle 10, the first axis A1 extend substantially vertical.

Additionally, the actuator unit 32 is configured to rotate the housing part 28 and the mirror part 24 being rigidly attached thereto with respect to the base part 20 around a second axis A2. In a condition in which the rearview mirror assembly 18 is mounted on the vehicle 10, the second axis A2 extend substantially horizontal.

Thus, using the actuator unit 32 and its ability to rotate the mirror part 24 around the first axis A1 and around the second axis A2, the orientation of the mirror part 24 can be adjusted to a specific eye position of a driver of the vehicle 10.

Altogether, the housing part 28 is movably coupled to the base part 20.

The rearview mirror assembly 18 additionally comprises a camera unit 34 which is attached to the base part 20 via a camera support part 36 and a spring 38.

The camera support part 36 has a first end 36a to which a support plate 40 is rigidly attached.

The camera unit 34 is rigidly attached to the support plate 40.

A second end 36b of the camera support part 36 is received in the interior of the base part 20. To this end, the camera support part 36 extends through an opening 42 of the camera support part 20.

In the present example, the camera support part 36 is tube-shaped.

Moreover, an outer diameter of the tube-shaped camera support part 36 substantially corresponds to a diameter of the opening 42.

Inside the base part 20, the second end 36b of the camera support part 36 is connected to the base part 20 using a mounting ring 44.

The mounting ring 44 only allows the camera support part 36 to rotate around an axis corresponding to its longitudinal extension with respect to the base part 20.

This means that the camera support part 36 has one rotational degree of freedom with respect to the base part 20. Otherwise, the camera support part 36 is rigidly connected to the base part 20.

In the present example, the longitudinal extension of the camera support part 36 corresponds to the first axis A1.

The spring 38 is formed as a coil spring which is wound around an end section of the camera support part 36 which is located adjacent to the second end 36b. A first end 38a of the spring 38 is rigidly attached to the base part 20. A second end 38b of the spring 38 is rigidly attached to the camera support part 36.

Consequently, the spring 38 needs to be deformed if the camera support part 36 is to be rotated with respect to the base part 20. More generally speaking, the camera support part 36 is resiliently supported on the base part 20.

Furthermore, a middle portion of the camera support part 36 extends through a channel 46 of the actuator unit 32. In other words, the actuator unit 32 extends around the camera support part 36. The camera support part 36 and the actuator unit 32 are drivingly independent. This means that the actuator unit 32 can move while the camera support part 36 is standing still.

In the present example, both the camera support part 36 and the base part 20 are hollow. The hollow interior of these two components forms a cable channel 48 which can be used for guiding cables to be connected to the camera unit 34.

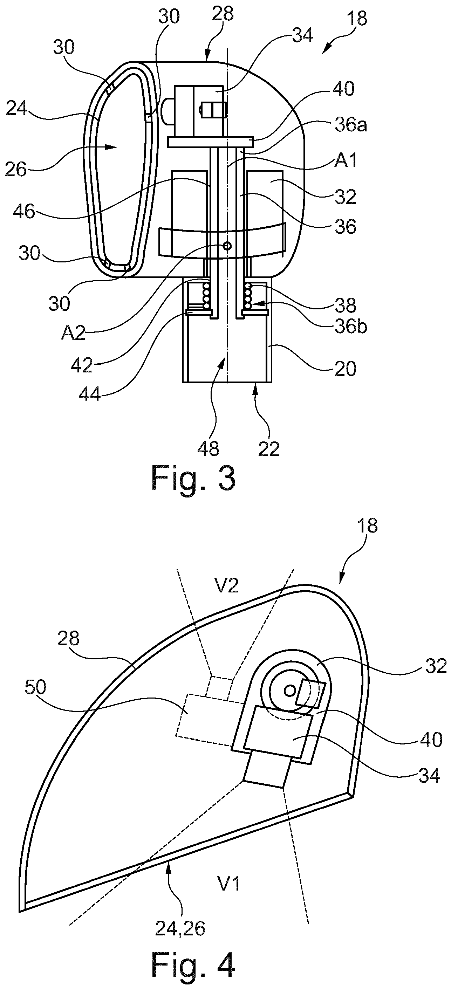

In the present example, a field of view V1 of the camera unit 34 extends through the mirror part 24 (cf. Figures 1 and 4). In the area where the field of view V1 of the camera unit 34 extends through the mirror part 24, the mirror part 24 is semi-transparent. This means that seen from direction II in Figure 1, the mirror part 24 acts as a mirror. Seen in a direction opposite to the direction II in Figure 1, the mirror part 24 is transparent. Consequently, the mirror part 24 does not obstruct the field of view V1 of the camera unit 34.

With respect to the vehicle 10, the field of view V1 extends backwards with respect to a standard forward driving direction of the vehicle 10.

Optionally, a supplementary camera unit 50 may be rigidly attached to the support plate 40. Due to the fact that the supplementary camera unit 50 is optional, it is represented in dashed lines in Figure 2 and 4 only.

A field of view V2 of the supplementary camera unit 50 extends through the housing part 28. In the area where the field of view V2 of the supplementary camera unit 50 extends through the housing part 28, the housing part 28 is transparent. The housing part 28 may for example comprise a transparent window in this area. This means that the supplementary camera unit 50 can see through the housing part 28.

With respect to the vehicle 10, the field of view V2 extends forward with respect to a standard driving direction of the vehicle 10.

It is noted that in a further alternative, only the supplementary camera unit 50 may be provided. This means that the supplementary camera unit 50 replaces the camera unit 34. During use, the actuator unit 32 can move the housing part 28 and the mirror part 24 with respect to the base part 20 such that an orientation of the mirror part 24 with respect to a driver can be adjusted. When doing so, the camera unit 34, the optional supplementary camera unit 50 and the camera support part 36 are standing still.

The same is true if, using the actuator unit 32, the housing part 28 and the mirror part 24 are moved from an operational position as represented in Figure 1, wherein the housing part 28 and the mirror part 24 stick out from the vehicle 10, into a storage position wherein the housing part 28 and the mirror part 24 are folded towards the respective left door 14 or right door 16 of the vehicle 10. The same applies in the opposite direction. The camera unit 34 and the optional supplementary camera unit 50 also stand still if this kind of movement is performed.

In a case in which the rearview mirror assembly 18 is subject to a mechanical impact from the rear, the fact that the mirror part 24 and the housing part 28 a movable with respect to the base part 20 may lead to a situation in which the mirror part 24 contacts the camera unit 34. This may best be derived from Figure 4.

In such a situation, the resilient support of the camera support part 36 on the base part 20 is used. This means that in such a case, the camera unit 34 together with the support plate 40 and the camera support part 36 may rotate clockwise with respect to the base part 20. This protects the camera unit 34 from being damaged due to such an impact.

It is noted that as an alternative to the example as described above, the camera unit 34 may as well be rigidly attached to the base part 20.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: vehicle body
- 13: structural component
- 14: left door
- 16: right door
- 18: rearview mirror assembly
- 20: base part
- 22: mounting interface
- 24: mirror part
- 26: reflective surface
- 28: housing part
- 30: fixation means
- 32: actuator unit
- 34: camera unit
- 36: camera support part
- 36a: first end of the camera support part
- 36b: second end of the camera support part
- 38: spring
- 38a: first end of the spring
- 38b: second end of the spring
- 40: support plate
- 42: opening
- 44: mounting ring
- 46: channel
- 48: cable channel
- 50: supplementary camera unit

- A1: first axis
- A2: second axis
- V1: field of view
- V2: field of view

## Claims

1. A rearview mirror assembly (18) for a vehicle (10), comprising a base part (20) having a mounting interface (22) for rigidly attaching the base part (20) to a structural component (13) of the vehicle (20),
a mirror part (24) carrying a reflective surface (26),
a housing part (28) covering at least a part of one side of the mirror part (24), and
an actuator unit (32) for moving the housing part (28) with respect to the base part (20), wherein the mirror part (24) is rigidly attached to the housing part (28),
wherein the housing part (28) is movably coupled to the base part (20), such that an orientation of the mirror part (24) is adjustable,
wherein a camera unit (34, 50) is attached to the base part (20) via a camera support part (36), and
wherein the camera support part (36) extends through the actuator unit (32).

2. The rearview mirror assembly (18) of claim 1, wherein the camera support part (36) comprises a cable channel (48).

3. The rearview mirror assembly (18) of claim 1 or 2, wherein the camera support part (36) is tube-shaped, bar-shaped or rod-shaped.

4. The rearview mirror assembly (18) of any one of the preceding claims, wherein the camera support part (36) is resiliently supported on the base part (20).

5. The rearview mirror assembly (18) of claim 4, wherein the camera support part (36) is supported on the base part (20) via a spring (38) or an elastomeric element.

6. The rearview mirror assembly (18) of claim 4 or 5, wherein the camera support part (36) has one rotational degree of freedom with respect to the base part (20) and is otherwise rigidly connected to the base part (20).

7. The rearview mirror assembly (18) of claim 6, wherein an axis of the rotational degree of freedom extends in parallel to a longitudinal extension of the camera support part (36).

8. The rearview mirror assembly (18) of any one of claims 1 to 3, wherein the camera unit (34, 50) is rigidly attached to the base part (20).

9. The rearview mirror assembly (18) of any one of the preceding claims, wherein a field of view (V1) of the camera unit (34) extends through the mirror part (24) and wherein the mirror part (24) is at least partially transparent.

10. The rearview mirror assembly (18) of any one of the preceding claims, wherein a field of view (V2) of the camera unit (50) extends through the housing part (28) and wherein the housing part (28) is at least partially transparent.

11. A vehicle (10) comprising a structural component (13) and a rearview mirror assembly (18) of any one of the preceding claims, wherein the rearview mirror assembly (18) is rigidly attached to the structural component (13) of the vehicle (10).

12. The vehicle (10) of claim 11, wherein a field of view (V1) of the camera unit (34) extends backwards with respect to a standard forward driving direction of the vehicle (10).

13. The vehicle (10) of claim 11 or 12, wherein a field of view (V2) of the camera unit (50) extends forward with respect to a standard forward driving direction of the vehicle (10).

## Patentansprüche

1. Rückspiegelanordnung (18) für ein Fahrzeug (10), umfassend einen Basisteil (20), der eine Montageschnittstelle (22) zum starren Anbringen des Basisteils (20) an einer strukturellen Komponente (13) des Fahrzeugs (20) aufweist, einen Spiegelteil (24), der eine reflektierende Oberfläche (26) trägt,
einen Gehäuseteil (28), das mindestens einen Teil einer Seite des Spiegelteils (24) bedeckt, und
eine Betätigungseinheit (32) zum Bewegen des Gehäuseteils (28) in Bezug auf den Basisteil (20),
wobei der Spiegelteil (24) starr an dem Gehäuseteil (28) angebracht ist,
wobei der Gehäuseteil (28) beweglich mit dem Basisteil (20) gekoppelt ist, dergestalt, dass eine Ausrichtung des Spiegelteils (24) verstellbar ist,
wobei eine Kameraeinheit (34, 50) über einen Kamerastützteil (36) an dem Basisteil (20) angebracht ist, und
wobei sich der Kamerastützteil (36) durch die Betätigungseinheit (32) hindurch erstreckt.

2. Rückspiegelanordnung (18) nach Anspruch 1, wobei der Kamerastützteil (36) einen Kabelkanal (48) umfasst.

3. Rückspiegelanordnung (18) nach Anspruch 1 oder 2, wobei der Kamerastützteil (36) rohrförmig, stabförmig oder stangenförmig ist.

4. Rückspiegelanordnung (18) nach einem der vorangehenden Ansprüche, wobei der Kamerastützteil (36) federnd auf dem Basisteil (20) gestützt ist.

5. Rückspiegelanordnung (18) nach Anspruch 4, wobei der Kamerastützteil (36) über eine Feder (38) oder ein elastomeres Element auf dem Basisteil (20) gestützt ist**.**

6. Rückspiegelanordnung (18) nach Anspruch 4 oder 5, wobei der Kamerastützteil (36) einen einzelnen Rotationsfreiheitsgrad in Bezug auf den Basisteil (20) hat und ansonsten starr mit dem Basisteil (20) verbunden ist.

7. Rückspiegelanordnung (18) nach Anspruch 6, wobei sich eine Achse des Rotationsfreiheitsgrades parallel zu einer Längserstreckung des Kamerastützteils (36) erstreckt.

8. Rückspiegelanordnung (18) nach einem der Ansprüche 1 bis 3, wobei die Kameraeinheit (34, 50) fest an dem Basisteil (20) angebracht ist.

9. Rückspiegelanordnung (18) nach einem der vorangehenden Ansprüche, wobei sich ein Sichtfeld (V1) der Kameraeinheit (34) durch den Spiegelteil (24) hindurch erstreckt und wobei der Spiegelteil (24) mindestens teilweise transparent ist.

10. Rückspiegelanordnung (18) nach einem der vorangehenden Ansprüche, wobei sich ein Sichtfeld (V2) der Kameraeinheit (50) durch den Gehäuseteil (28) hindurch erstreckt und wobei der Gehäuseteil (28) mindestens teilweise transparent ist.

11. Fahrzeug (10), umfassend eine strukturelle Komponente (13) und eine Rückspiegelanordnung (18) nach einem der vorangehenden Ansprüche, wobei die Rückspiegelanordnung (18) starr an der strukturellen Komponente (13) des Fahrzeugs (10) angebracht ist.

12. Fahrzeug (10) nach Anspruch 11, wobei sich ein Sichtfeld (V1) der Kameraeinheit (34) in Bezug auf eine Standardvorwärtsfahrtrichtung des Fahrzeugs (10) nach hinten erstreckt.

13. Fahrzeug (10) nach Anspruch 11 oder 12, wobei sich ein Sichtfeld (V2) der Kameraeinheit (50) in Bezug auf eine Standardvorwärtsfahrtrichtung des Fahrzeugs (10) nach vorn erstreckt.

## Revendications

1. Ensemble rétroviseur (18) pour un véhicule (10), comprenant une partie de base (20) ayant une interface de montage (22) pour fixer rigidement la partie de base (20) à un composant structural (13) du véhicule (20),
une partie miroir (24) portant une surface réfléchissante (26),
une partie boîtier (28) recouvrant au moins une partie d'un côté de la partie miroir (24), et une unité d'actionnement (32) pour déplacer la partie boîtier (28) par rapport à la partie base (20), dans lequel la partie miroir (24) est fixée rigidement à la partie boîtier (28), dans lequel la partie boîtier (28) est accouplée de manière mobile à la partie de base (20), de telle sorte qu'une orientation de la partie miroir (24) soit réglable,
dans lequel une unité de caméra (34, 50) est fixée à la partie de base (20) par l'intermédiaire d'une partie support de caméra (36), et
dans lequel la partie support de caméra (36) s'étend à travers l'unité d'actionnement (32).

2. Ensemble rétroviseur (18) selon la revendication 1, dans lequel la partie support de caméra (36) comprend une conduite de câble (48).

3. Ensemble rétroviseur (18) selon la revendication 1 ou 2, dans lequel la partie support de caméra (36) est en forme de tube, de barre ou de tige.

4. Ensemble rétroviseur (18) selon l'une quelconque des revendications précédentes, dans lequel la partie support de caméra (36) est supportée de manière élastique sur la partie de base (20).

5. Ensemble rétroviseur (18) selon la revendication 4, dans lequel la partie support de caméra (36) est supportée sur la partie de base (20) par l'intermédiaire d'un ressort (38) ou d'un élément élastomère.

6. Ensemble rétroviseur (18) selon la revendication 4 ou 5, dans lequel la partie support de caméra (36) a un degré de liberté de rotation par rapport à la partie de base (20) et est par ailleurs reliée rigidement à la partie de base (20).

7. Ensemble rétroviseur (18) selon la revendication 6, dans lequel un axe du degré de liberté de rotation s'étend parallèlement à une extension longitudinale de la partie support de caméra (36).

8. Ensemble rétroviseur (18) selon l'une quelconque des revendications 1 à 3, dans lequel l'unité de caméra (34, 50) est fixée rigidement à la partie de base (20).

9. Ensemble rétroviseur (18) selon l'une quelconque des revendications précédentes, dans lequel un champ de vision (V1) de l'unité de caméra (34) s'étend à travers la partie miroir (24) et dans lequel la partie miroir (24) est au moins partiellement transparente.

10. Ensemble rétroviseur (18) selon l'une quelconque des revendications précédentes, dans lequel un champ de vision (V2) de l'unité de caméra (50) s'étend à travers la partie boîtier (28) et dans lequel la partie boîtier (28) est au moins partiellement transparente.

11. Véhicule (10) comprenant un composant structural (13) et un ensemble rétroviseur (18) selon l'une quelconque des revendications précédentes, dans lequel l'ensemble rétroviseur (18) est fixé rigidement au composant structural (13) du véhicule (10).

12. Véhicule (10) selon la revendication 11, dans lequel un champ de vision (V1) de l'unité de caméra (34) s'étend vers l'arrière par rapport à une direction de conduite avant standard du véhicule (10).

13. Véhicule (10) selon la revendication 11 ou 12, dans lequel un champ de vision (V2) de l'unité de caméra (50) s'étend vers l'avant par rapport à une direction de conduite avant standard du véhicule (10).
